Europäisches Patentamt

European Patent Office

Office européen des brevets

(11) Publication number: **0 136 380**
**B1**

# EUROPEAN PATENT SPECIFICATION

(45) Date of publication of patent specification: **29.04.87**

(51) Int. Cl.⁴: **B 01 D 11/02, A 24 B 15/24**

(21) Application number: **83305985.0**

(22) Date of filing: **03.10.83**

(54) **Extraction apparatus and process.**

(43) Date of publication of application:
**10.04.85 Bulletin 85/15**

(45) Publication of the grant of the patent:
**29.04.87 Bulletin 87/18**

(84) Designated Contracting States:
**BE CH DE FR GB IT LI NL**

(56) References cited:
**FR-A- 610 501**
**FR-A-1 478 969**
**GB-A- 428 906**
**US-A-2 641 536**
**US-A-4 221 764**

(73) Proprietor: **FABRIQUES DE TABAC REUNIES S.A.**
**Quai Jeanrenaud 3 P.O. Box 11**
**CH-2003 Neuchâtel-Serrières (CH)**

(72) Inventor: **Luethi, Niklaus**
**Hauptstrasse 79**
**2563 Ipsach (CH)**
Inventor: **Juillerat, Michel**
**Clos-de-Serrieres 31**
**2003 Neuchatel (CH)**

(74) Representative: **Bass, John Henton et al**
**REDDIE & GROSE 16 Theobalds Road**
**London WC1X 8PL (GB)**

Courier Press, Leamington Spa, England.

## Description

This invention relates to extraction apparatus in which one or more components are removed from a solid substrate by a liquid, and to use of the extractor for extracting soluble constituents for tobacco.

It is often necessary to subject a solid substrate to liquid extraction. In many cases, for example in the extraction of tobacco during its preparation for cigarette manufacture, it is desirable that the structure of the substrate remain substantially intact during the extracting. Many known extraction systems fail to meet this requirement when operating under conditions giving efficient extraction. Consequently, there is a need for an extraction apparatus which, while providing efficient extraction, preserves the structural integrity of the substrate.

US—A—4 221 764 and FR—A—1 478 969 describe extraction apparatus comprising a plurality of interconnected liquid-permeable containers for the substrate arranged to move along a continuous path in the course of which the substrate is contacted by the liquid. The present invention is characterized in that part of the continuous path for the substrate arranged to move along a continuous path, through a vessel containing the liquid so that, during the passage of the containers through the liquid, the substrate is immersed in the liquid.

The apparatus is particularly suitable for the extraction of tobacco, especially in strip form. Various soluble substances can be eluted from tobacco by extraction, and it is frequently desirable to remove one or more such components as completely as possible, while leaving on the tobacco part or all of the other soluble components. Thus, nitrates are believed to be responsible for the formation of oxides of nitrogen in the gaseous combustion products of tobacco, but can be readily removed by extraction with water. On the other hand, other soluble components contribute to the flavour of the tobacco or, as in the case of nicotine, to the satisfaction experienced by the smoker and should be retained, at least in part, in the treated tobacco.

The invention thus additionally provides a process for extracting tobacco in the apparatus defined above, in which the tobacco is charged into a series of permeable containers, which are successively passed through an extraction liquid, under conditions such that at least a portion of the soluble components is dissolved out of the tobacco.

In preferred applications of this process, after the containers have been removed from the liquid extract and the extracted tobacco discharged therefrom, the liquid extract, after the removal of one or more specific components dissolved therein, is again contacted with tobacco either before or after the tobacco is extracted. In the latter case, the tobacco is preferably at least partly dried and the extract concentrated before application to the dried tobacco.

The invention will now be further described with reference to the drawings in which:

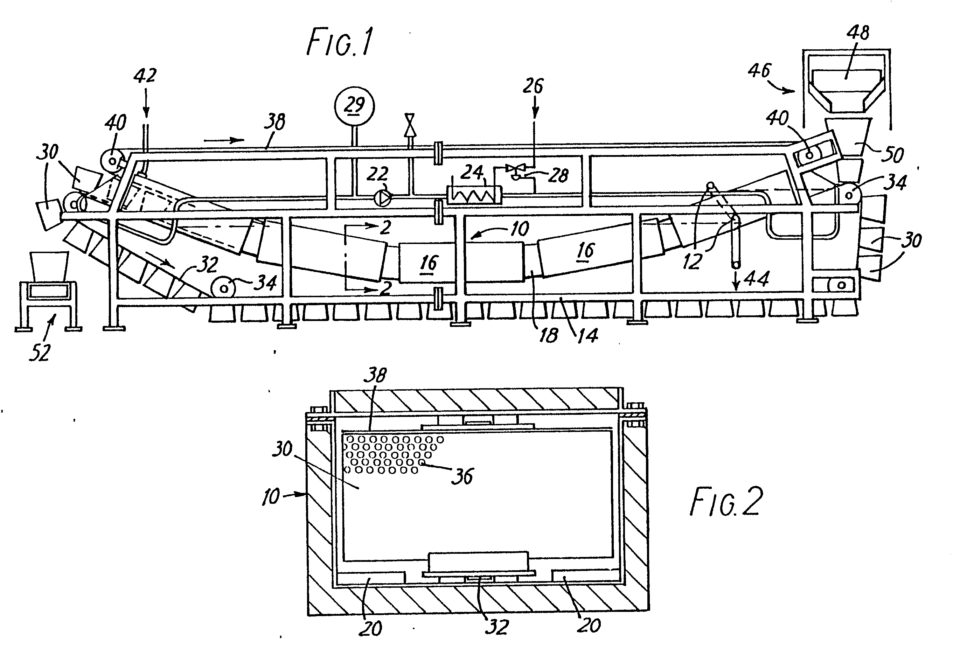

Fig. 1 is a side elevation of an apparatus embodying this invention; and

Fig. 2 is a cross-sectional view on the line 2—2 of Fig. 1.

The embodiment shown in the drawings, suitable for the extraction of tobacco with water, comprises a lagged tubular body 10, containing the extraction liquid at a level 12, and supported on a frame 14.

Advantageously, the extractor body may be arranged in shallow 'V' shape with end portions sloping downwardly to a low central region, as shown in the drawings, which has been found to provide particularly efficient extraction. It may be fabricated from a series of similar hollow, for example rectangular, sections 16 interconnected by rectangular tubular elements 18 and seals. A valve (not shown) may be fitted at the lowest point of the body to facilitate emptying of the extractor.

The liquid may, if desired, be heated by heat transfer from a hot fluid, such as hot water, passing through pipes 20 extending through the extractor body. The heating fluid is circulated by a pump 22, and is itself heated, for example, by steam supplied to a heat exchanger 24 by a pipe 26 provided with a temperature-controlled valve 28. The pipes 20 are provided with an expansion chamber 29.

A number of containers 30 for the substrate to be extracted are affixed to an endless transportor chain 32, which passes through the extractor body 10, and is guided along the desired path by guide rollers 34. The walls of the containers 30 are provided with perforations 36, to allow the liquid to enter the containers when they are immersed. The containers are open at the top to allow them to be charged with and discharged of the substrate.

An endless closure belt 38 is provided, which also passes through the extractor body 10, and is guided by further guide rollers 40. This belt is held over the containers 30 whilst they are in the extractor body, closing off their open tops to prevent the substrate from leaving the containers by flotation during the extraction process.

The liquid is supplied to the extractor body 10 by an inlet 42 and is maintained in the vessel at a desired level between two extremes 12 by outlet 44, the height of which is adjustable between the two positions shown. Advantageously, there are two inlets 42, located on either side of the body 10 to direct liquid onto the upper surface of the closure belt 38 near the inlet end. Preferably, the outlet 44 is located in the extractor towards the end at which the containers 30 enter it, and the inlets 42 are located towards the other end, so that the containers move in countercurrent with flow of extracting liquid.

Charging means 46, comprising a transportable bucket 48 and a chute 50 for feeding the substrate into the containers 30 are provided adjacent the point of entry of the containers to the extractor body 10, and a conveyor belt 52 or other suitable discharge means, is provided adjacent the point where the containers leave the extractor body. The extracted substrate may be further treated to remove residual extraction liquid, for example by vacuum, pressure belt or other means, for which purpose the conveyor may be perforate.

In use, the transport belt 32 is driven by a motor, now shown, to move the containers 30 round their closed path. As they pass beneath the chute 50, a triggering device, for example actuated by the containers themselves, causes a charge of substrate to enter each container in turn through their open tops. The containers are then moved into the extractor body 10, where the closure belt 38 moves over them to close off the open top. Conveniently, both the transport belt 32 and the closure belt 38 are driven by the same motor with a variable speed control. The containers 30 then enter the extracting liquid at the level 12, and move down through the liquid, which enters the containers through the perforations 36 in the container walls.

When the containers 30 have passed through the liquid on the transport belt 32, they leave the extractor body 10, and the closure belt 38 moves away from the containers, leaving them open at the top once again. The transport belt 30 is guided to carry the containers, when they have left the extractor body, to a position where they are tipped up to discharge the extracted substrate onto the conveyor 52 for removal or further treatment. The empty containers 30 are then moved by the transport belt 32 back towards the charging chute 37, and the cycle is repeated.

The liquid may be continuously removed from the extractor body 10, and either cleaned and recycled to the extractor, or discharged for further treatment or to waste. In continuous operation, any extraction liquid lost to the extractor system must be made good by the supply of fresh liquid.

Advantageously, one or more of the containers 30 may be replaced by a cleaning device (not shown), such as a rubber scraper, which contacts the sides and bottom of the extractor body 10 to clean it of any deposits which may build up in it. In this case, the triggering device for the charging means 46 is suitably designed to distinguish between the container 30 and the cleaning devices, for example, by employing a pair of spaced microswitches, such that only when both switches are simultaneously actuated (which requires the length of a container) will charging be initiated.

The apparatus of the invention provides an extraction system which, while providing efficient extraction of components from the substrate, does not subject the substrate to mechanical stresses likely to cause physical breakup.

It is particularly suitable for the treatment of tobacco for the manufacture of smoking products such as cigarettes, for example in the form of tobacco strip, because it does not impair the mechanical ability of the tobacco to form or fill a smoking article.

In the use of the apparatus for removal of one or more soluble components, such as nitrate, tobacco strip (or some other form of smoking tobacco in the course of manufacture) is fed into the perforated containers at the input end of the extractor. The liquid, for example water, is heated to a suitable temperature, usually in the range 20—90°C, and the speed of movement of the containers through the body of the extractor is adjusted to give a desired residence time in the liquid, for example from 15 to 60 minutes.

When the extracted tobacco is discharged from the containers, it can be treated to remove residual extract, for example by mechanical pressure and suction, and can then be dried. Liquid extract recovered at this stage can be combined with the bulk of the extract flowing out of the extractor body.

Since components other than those it is intended to remove will in most cases also be dissolved in the liquid, the extract will usually be contacted again with tobacco to maintain the level of such other components in the tobacco product. In an open system, the extract leaving the extractor is treated to remove undesirable components, such as nitrates, and may be concentrated by evaporation, and is then re-applied to the extracted tobacco, preferably after the latter has been dried, and the restored tobacco dried once more.

Alternatively, in a closed system, undesirable components are continuously removed from the extract, and the purified extract, still containing desired components, is recycled to the liquid inlet of the extractor. The concentration of desired components in the recycled extract will build up during the initial phase of operation until, when equilibrium is reached, the recycled extract is saturated with such components or at least has attained such a concentration that unacceptable depletion of such components from the tobacco being treated is avoided, only the unwanted components being extracted and thereafter removed from the liquid extract.

It will be evident that other modes of operation are possible, for example a recycling system with proportionate bleed-off and replenishment of extraction liquid.

Various processes are available for the removal of unwanted components from tobacco extracts. These include microbiological processes as described for example in GB—A—1 585 023 or EP—A—0 075 388, crystallization processes as US—A—4 131 117 and 8, or electrodialysis processes as in US—A—4 253 929.

The process aspect of the invention will be further described by means of a specific example of its practice.

Example

Tobacco strips are charged in successive lots of 0.35 kg into respectives perforated stainless steel baskets of 10 litre volume capacity, in an apparatus as shown in the drawings and described above. The baskets are advanced, for example at speeds between 4 and 19 metres per hour, to give a residence time in the liquid in the stainless steel extractor body of 15 to 60 minutes.

The aqueous extraction liquid can be employed at temperatures of from 20 to 90°C, and in a typical operation the extraction liquid was water, at least at the beginning of the run, the temperature was 80°C, the residence time 45 minutes and the ratio of tobacco strips to liquid in the extractor 1:12.

After discharge and dewatering, the tobacco strips are dried, preferably at a temperature of 70—80°C, to minimise loss of soluble components by evaporation, and to a final moisture content of 12—13%.

The liquid extract discharged from the extractor outlet can then be denitrated, concentrated and reapplied to the dried tobacco, or denitrated and recycled to the inlet of the extractor. The extract is preferably sterilized, for example by direct steam injection at 135°C or by an indirect heat exchanger at 121°C. Fermentative denitration may then be carried out with a suitable denitrating microorganism under conditions appropriate to the organism. In a typical operation, the organism was *Candida utilis* and fermentation was conducted at a temperature of 30° and a pH value maintained in the range 4.5—5.0, with the addition nutrient carbohydrate in the necessary quantities. Biomass is separated from the extract, for example centrifugally.

In the open-loop mode, the clarified, denitrated extract is concentrated, for example to 35% solids content in a forced-circulation evaporator, and reapplied to the dried tobacco, for example by means of a conventional casing drum. Re-drying then follows as before. In the closed-loop mode, the clarified, denitrated extract is recycled to the inlet of the extractor as indicated above. The latter mode has the advantage that it avoids the energy-consuming steps of evaporation concentration of the liquid extract and re-drying of tobacco involved in the open loop mode.

Experience with this apparatus and process has shown that it is capable of a high level of nitrate removal without unacceptable mechanical damage to the structure of the tobacco strips.

## Claims

1. Extraction apparatus for extraction of one or more components from a substrate by a liquid, comprising a plurality of interconnected liquid-permeable containers (30) for the substrate arranged to move along a continuous path, in the course of which the substrate is contacted by the extracting liquid, characterized in that part of the continuous path passes through a vessel (10) containing the liquid so that, during the passage of the containers through the liquid, the substrate is immersed in the liquid.

2. Extraction apparatus according to claim 1, characterized in that the path of the containers (30) has regions which are inclined and slope down to and up from a low central region respectively.

3. Extraction apparatus according to claim 1 or 2, characterized in that the vessel (10) is generally tubular in form.

4. Extraction apparatus according to claim 1, 2 or 3, characterized in that the containers (30) are affixed to an endless transport belt or chain (32) which passes through the vessel.

5. Extraction apparatus according to any preceding claim, characterized in that at least a portion of each container (30) is perforate, and that one wall of each container is open for admission and discharge of substrate.

6. Extraction apparatus according to claim 5, further characterized by an endless closure belt (38) which passes through the vessel (10) in contact with the containers (30) to close off the open wall of the latter during passage through the liquid.

7. Use of the apparatus according to any preceding claim in a process for the extraction of tobacco.

8. A process according to claim 7, characterized in that the tobacco is contacted with an aqueous extraction liquid at 20—90°C for a period of 15—60 minutes.

9. A process according to claim 7 or 8, characterized in that the liquid extract, after separation from the tobacco, is treated to remove at least one dissolved component thereof and thereafter is again contacted with tobacco.

10. A process according to claim 8 characterized in that the extract is treated to remove nitrate therefrom, concentrated by evaporation, and applied to extracted tobacco that has been at least partly dried.

11. A process according to claim 8 characterized in that the extract is treated to remove nitrate therefrom, and then recycled to the extraction apparatus to contact fresh tobacco.

## Patentansprüche

1. Extraktionsvorrichtung zum Extrahieren einer oder mehrerer Komponenten aus einem Substrat mittels einer Flüssigkeit, die eine Mehrzahl von miteinander verbundenen, flüssigkeitsdurchlässigen Behältern (30) für das Substrat hat, die sich längs einer durchgehenden Bahn bewegen, in deren Verlauf das Substrat mit der Extraktionsflüssigkeit kontaktiert wird, dadurch gekennzeichnet, daß ein Teil der durchgehenden Bahn durch einen Behälter (10) geht, der die Flüssigkeit enthält, so daß während des Durchgangs der Behälter durch die Flüssigkeit das Substrat in die Flüssigkeit eingetaucht wird.

2. Extraktionsvorrichtung nach Anspruch 1, dadurch gekennzeichnet, daß die Bahn der Behälter (30) Bereiche hat, die geneigt sind und von einem unteren mittleren Bereich jeweils nach unten und oben abgeschrägt sind.

3. Extraktionsvorrichtung nach Anspruch 1 oder 2, dadurch gekennzeichnet, daß der Behälter (10) im allgemeinen eine rohrförmige Gestalt hat.

4. Extraktionsvorrichtung nach Anspruch 1, 2 oder 3, dadurch gekennzeichnet, daß die Behälter (30) an einem endlosen Förderband oder -kette (32) befestigt sind, das oder die durch den Behälter geht.

5. Extraktionsvorrichtung nach einem der vorangehenden Ansprüche, dadurch gekennzeichnet, daß wenigstens ein Teil jedes Behälters (30) mit Öffnungen versehen ist und daß eine Wand jedes Behälters offen ist, um das Substrat einzubringen und auszutragen.

6. Extraktionsvorrichtung nach Anspruch 5, ferner gekennzeichnet durch ein endloses Verschlußband (38), das durch den Behälter (10) im Kontakt mit den Behältern (30) geht, um die offene Wand der letztgenannten während des Durchgangs durch die Flüssigkeit zu verschließen.

7. Verwendung der Vorrichtung nach einem der vorangehenden Ansprüche bei einem Verfahren zur Extraktion von Tabak.

8. Verfahren nach Anspruch 7, dadurch gekennzeichnet, daß der Tabak mit einer wässrigen Extraktionsflüssigkeit bei 20 bis 90°C während einer Zeitdauer von 15 bis 60 Minuten kontaktiert wird.

9. Verfahren nach Anspruch 7 oder 8, dadurch gekennzeichnet, daß der flüssige Extrakt nach der Trennung vom Tabak behandelt wird, um wenigstens eine darin gelöste Komponente zu entfernen und dann erneut mit dem Tabak kontaktiert wird.

10. Verfahren nach Anspruch 8, dadurch gekennzeichnet, daß der Extrakt behandelt wird, um Nitrat zu entfernen, das durch Verdampfung konzentriert wurde, und auf den extrahierten Tabak aufgebracht wird, der wenigstens teilweise getrocknet wurde.

11. Verfahren nach Anspruch 8, dadurch gekennzeichnet, daß der Extrakt behandelt wird, um Nitrat zu entfernen, und daß es dann in die Extraktionsvorrichtung zurückgeführt wird, um frischen Tabak zu kontaktieren.

**Revendications**

1. Appareil d'extraction pour l'extraction d'au moins un composant d'un substrat par un liquide, comportant une série de conteneurs (30) pour le substrat, perméables au liquide et interconnectés entre-eux, disposés de manière à se déplacer suivant une trajectoire continue au cours de laquelle le substrat est mis au contact du liquide d'extraction, caractérisé en ce qu'une partie de la trajectoire continue traverse une enceinte (10) contenant le liquide de sorte que, pendant le passage des conteneurs dans le liquide, le substrat est immergé dans ce dernier.

2. Appareil d'extraction selon la revendication 1, caractérisé en ce que la trajectoire des conteneurs (30) comprend des régions qui sont inclinées et s'abaissent et se relèvent à partir d'une région centrale basse.

3. Appareil d'extraction selon la revendication 1 ou 2, caractérisé en ce que l'enceinte (10) est de forme tubulaire.

4. Appareil d'extraction selon l'une des revendications 1 à 3, caractérisé en ce que les conteneurs (30) sont fixés sur une courroie ou une chaîne convoyeur sans fin (32) qui traverse l'enceinte.

5. Appareil d'extraction selon l'une des revendications précédentes, caractérisé en ce qu'au moins une partie de chaque conteneur (30) est perforée, et en ce qu'une paroi de chaque conteneur est ouverte pour le chargement ou le déchargement en substrat.

6. Appareil d'extraction selon la revendication 5, caractérisé en ce qu'il comporte, de plus, un tapis de fermeture sans fin (38) qui traverse l'enceinte (10) au contact des conteneurs (30), pour obturer la paroi ouverte de ces derniers pendant leur passage dans le liquide.

7. Application de l'appareil selon l'une quelconque des revendications précédentes à un procédé de traitement par extraction du tabac.

8. Procédé selon la revendication 7, caractérisé en ce que le tabac est mis au contact d'un liquide d'extraction aqueux dont la température est comprise entre 20°C et 90°C, pendant une durée de 15 à 60 minutes.

9. Procédé selon la revendication 7 ou 8, caractérisé en ce que le liquide d'extraction, lorsqu'il n'est plus au contact du tabac, est traité pour en éliminer au moins un des composants qui y sont dissous puis ensuite remis au contact du tabac.

10. Procédé selon la revendication 8, caractérisé en ce que le liquide d'extraction est traité pour en retirer le nitrate concentré par évaporation, puis appliqué à du tabac traité par extraction, qui a été au moins partiellement séché.

11. Procédé selon la revendication 8, caractérisé en ce que le liquide d'extraction est traité pour en retirer les nitrates puis ensuite recyclé dans l'appareil d'extraction pour être mis au contact de tabac frais.

# FIG.1

# FIG.2

0 136 380